# EUROPEAN PATENT SPECIFICATION

(11) **EP 1 776 904 B1**
(45) Date of publication and mention of the grant of the patent: **27.02.2008**
(21) Application number: 05425738.1
(22) Date of filing: 21.10.2005
(51) Int. Cl.: A47J 31/40

(54) **Method and device for the preparation and distribution of a chocolate drink**
Verfahren und Vorrichtung zur Herstellung und Verabreichung von einem Schokoladengetränk
Procedé et dispositif de préparation et de distribution de boisson de chocolat

(43) Date of publication of application: 25.04.2007
(73) Proprietor: Gruppo Cimbali S.p.A., 20082 Binasco (MI) (IT)
(72) Inventor: Coccia, Andrea, 20082 Binasco (MI) (IT); Sala, Dario, 20082 Binasco (MI) (IT)
(74) Representative: Perani, Aurelio

(56) References cited:
- EP-A- 1 550 391
- FR-A- 1 444 168
- US-A- 6 099 878
- US-A1- 2004 118 291

## Description

The present invention relates to a method for the preparation and distribution of a hot chocolate drink, wherein a dose of the liquid which forms the drink is heated to a predetermined temperature and a dose of a preparation containing chocolate is dispersed in the dose of heated liquid.

A method of this kind is for instance disclosed in FR 1444168.

The invention also relates to a device for implementing the method, preferably, although not exclusively, in connection with an espresso coffee machine.

As is known, amongst the equipment used in bars, hotels, restaurants and the like, the type of machine which is commonly known as an espresso coffee machine is in reality a device which, in addition to the espresso coffee, also provides many other services.

In fact, by means of these machines, it is possible to distribute hot water for the production of infusions such as tea and camomile, and to distribute superheated steam, which, by means of its thermal and kinetic energy, makes it possible to heat milk quickly and to form the fine foam which characterises a cappuccino.

In the machines of a conventional type, the production of the various drinks depends on a certain manual process carried out by the operator, who inserts the filter containing the ground coffee in the machine, empties the dregs manually, and directs the jet of steam into the jug containing the milk or chocolate, whilst working the drink with skilful movements until the best quality is obtained.

In recent years, with the increasingly widespread diffusion of espresso coffee machines on the world market, in order to overcome the need for particular manual skill by the operator, machines have been developed in which there is ever more automation of the manual operations carried out by the bartender. For this purpose the operators in the field have produced inventions for automation, with a quality which is found to be comparable to that obtained manually, firstly of the preparation of the espresso coffee, then for distribution of the hot water, and finally for that of the whipped milk and of the cappuccino.

The automation of the production of hot chocolate constitutes a further implementation of the automation of the functions, provided that a quality is obtained which is comparable in terms of density and temperature with that which is produced manually.

In the devices which have been known and used for a long time on the distributor market, the automatic production of the chocolate is usually carried out by sending to a mixer predetermined doses of a powdered chocolate preparation and hot water produced in an appropriate heater. The process ends with a brief operation of rinsing with the same hot water distributed.

In these heaters, which commonly consist of closed boilers or of open-topped tanks, the temperature of the hot water is subject to certain variation caused by the hysteresis of the thermostats, the stratification of the liquid at rest, and the thermal inertia of the cold refilling water.

The drink is produced with a low concentration of powder because of the requirement to keep the mixture flowing in order to avoid incrustations which could block the distributor device.

In addition, the temperature limits of the boiler also affect the efficiency of the automatic washing cycles of the mixer.

On the other hand, temperature variations up to values which are too high can "cook" excessively some components of the powdered preparation mixtures which are commercially available, thus detracting from the flavour and taste of the drink.

Thus, according to the known techniques which are in use at present for their formation and automatic distribution, the hot chocolate drinks do not achieve the conditions of temperature and density which can make them comparable to those which are prepared manually.

The combination of a device for the production of hot chocolate drinks with an automatic espresso coffee machine also involves sharing a source of hot water which is already installed in the machine, thus subtracting a quantity of hot water which is destined for the coffee and/or for the hot water distributor for the tea. This last case is particularly problematic for machines with small dimensions with small heaters, such that, in order to limit this problem, in some machines the possibility of distribution in succession of the services which are dependent on the heater are inhibited until the heater has regained adequate thermal conditions.

A particular case also concerns machines which are provided with a single steam boiler wherein the water available is superheated, and wherein it would be necessary to add a specific water heater with a consequent increase in the installed power and in the complexity of the machine.

In addition, in devices which are provided with this type of heater, only the water is heated, because any dose of milk for the chocolate is provided only as a powdered ingredient in the preparation for the drink.

The object of the present invention is thus to provide a method for the preparation of hot chocolate at the optimum temperature and density required, which permits automation particularly, although not exclusively, on an espresso coffee machine which is either of the bar type, or is of the type for automatic distribution of drinks.

A further object of the invention is to provide a device which can produce hot chocolate in the optimum conditions, with characteristics which mean that it can also be used in the context of machines for the preparation and distribution of espresso coffee.

This object is achieved by means of a method according to claim 1 hereinafter, and a device according to claim 11.

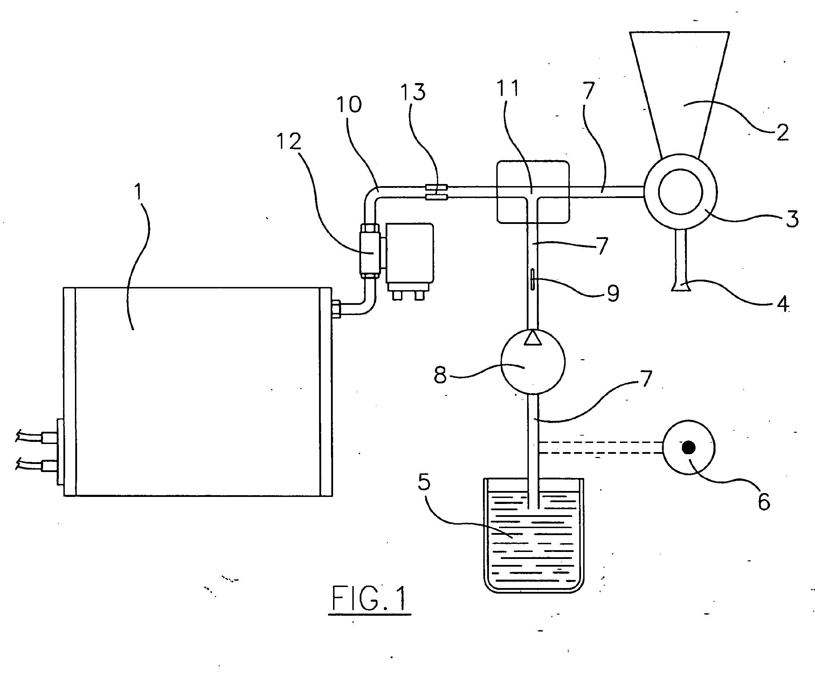

The invention will now be described in greater detail with reference to the diagram of the device illustrated in the attached figure 1.

With reference to this figure, 1 indicates a source of hot water and steam. By way of example, the source 1 can be the boiler of a machine for the preparation of espresso coffee, cappuccino and other drinks, of the type described in W02002/008296, which can provide energy for the steam whilst maintaining its distribution pressure in a very narrow band of oscillation, and thus maintaining a flow which is virtually constant. By means of intelligent management of the accumulation of energy, this type of boiler can provide the device for the preparation of the chocolate with the necessary heat, without detracting from any other services, and without needing to increase the installed power.

2 indicates a proportioning device for the product containing chocolate, which is connected to a mixing chamber 3 provided with a conventional mixer, not shown, in which the chocolate drink is prepared. The finished drink is discharged through a distribution spout 4 and reaches a collection container below, which is not shown.

The product containing chocolate can be conventionally in the form of powdered chocolate to which a quantity of powdered milk may or may not be added. Alternatively, this product with chocolate can also be in liquid or cream form. Finally, it can also comprise other ingredients and flavours according to particular gastronomic recipes.

5 illustrates a tank, which is optionally cooled in a conventional manner, for the liquid for formation of the chocolate drink. This liquid can be fresh or long-life milk. Alternatively it can simply be water at ambient temperature.

In this last case, the tank 5 can advantageously be replaced by a source 6 represented by a conventional connection to the drinking water distribution mains, which can also advantageously be used, after the heating, for washing of the mixing chamber 3.

From the source 5 or from the source 6 of the liquid which is destined for formation of the drink, there extends a pipe 7 which reaches the mixing chamber 3. On the pipe 7 there is provided a pump 8, and downstream from the pump there is a choke 9 of the calibrated type.

An additional pipe 10 is disposed between the boiler 1 steam source and a point 11 of confluence in the pipe 7 for the liquid for formation of the drink. This point of confluence 11 is located between the calibrated choke 9 and the mixing chamber 3.

When the pump 8 is activated, the liquid is conveyed through the pipe 7 at a predetermined pressure to the point of confluence 11 to which, via the electro-valve 12 which is activated simultaneously with the pump 8, there is also conveyed the steam which is obtained from the boiler via the pipe 10. When, at the point of confluence 11, the steam comes into contact with the cold liquid obtained from the tank 5 or from the source 6, impelled by the pump 8, it condenses and transfers the condensation heat and part of its specific heat to the liquid is conveyed along the pipe 7. The temperature reached by the liquid in the pipe 7 depends on the ratio between the flow rate of the steam Qv and that of the liquid Q1. Since the condensation heat and the specific heat of the steam are constant, as is the specific heat which is characteristic of the liquid, by setting the ratio Qv/Q1 accordingly via the pressure in the boiler 1, the pressure in the pump 8 and the flow rate calibrators 9 and 13, it is possible to set the required temperature of the liquid at the output of the point of confluence 11 towards the mixing chamber 3, where it is mixed with the preparation obtained from the proportioning device 2.

It should be pointed out that the method according to the invention provides a high speed of transmission of the heat to the liquid which forms the drink. In fact, with the steam which is obtained from the boiler 1, for example from a boiler of an espresso coffee machine, by means of the calories which have accumulated in the superheated steam, it is possible, for example, to heat a litre of milk in one minute from 5°C to 80°C, by distributing power of over 5000 Watts.

It is thus possible to distribute chocolate drinks with the correct temperature even with a high frequency of distribution.

In addition, because the preparation liquid is available at a constantly high temperature, in the drink distributed automatically it is also possible to obtain a density such as to make it substantially the same as a similar drink prepared manually using traditional methods.

Finally, because of the availability of water at a high temperature even after operative cycles in quick succession, the method according to the invention makes it possible to carry out the washing of the mixing chamber 3 efficiently, even though the residues of the drink in this chamber have a relatively high density.

## Claims

1. Method for the preparation and distribution of a hot chocolate drink, wherein a dose of the liquid which forms the drink is heated to a predetermined temperature and a dose of a preparation containing chocolate is dispersed in the dose of heated liquid, **characterised in that** the dose of liquid is heated to the required temperature by making a flow of steam with a constant flow rate obtained from a source of steam flow for a predetermined time into a flow of the said liquid which forms the drink, which also has a constant flow rate, and is obtained from a respective source by setting the ratio Qv/Qf, whereby the required temperature is reached through the transfer of the condensation heat of the flow of steam and **in that** the chocolate drink is prepared in a mixing chamber (3).

2. Method according to claim 1, wherein the finished drink is discharged through a distribution spout (4) before reaching a collection container.

3. Method according to claim 1, wherein the said preparation containing chocolate is in powder form.

4. Method according to claim 1, wherein the said preparation containing chocolate is in liquid form.

5. Method according to claims 1 to 4, wherein the said liquid which forms the drink consists of water taken from a source.

6. Method according to claim 5, wherein the source of the water is a water distribution mains.

7. Method according to claim 5, wherein the source of the water consists of a tank.

8. Method according to claims 1 to 4 , wherein the said liquid for the chocolate drink consists of milk taken from a corresponding container.

9. Method according to claim 8, wherein the milk is of the long-life type.

10. Method according to claims 1 to 9, wherein the said flow of steam consists of superheated steam.

11. Method according to claims 1 to 10, wherein the source of the said flow of steam consists of the boiler of a machine for the preparation and distribution of espresso, coffee.

12. Device for the preparation and distribution of a hot chocolate drink according to the method of claim 1 comprising a source of water vapour (1), a source (5,6) of liquid for the formation of the drink, a distributor proportioning device (2) for a preparation containing chocolate, a chamber (3) for mixing this preparation with the liquid for formation of the drink, whereby it includes a pipe (7) for supply of the liquid for formation of the drink, between the said source of liquid (5,6) and the said mixing chamber (3), pumping means (8) and calibrated choke means (9) which are disposed on this pipe (7) and generate a flow of liquid with a predetermined constant flow rate, a pipe (10) to supply steam between the source of steam (1) and a point of confluence (11) inside the said pipe (7) to supply the liquid for formation of the drink, disposed between the said calibrated choke means (9) and the said mixing chamber (3), the said pipe (10) for supply of the steam being provided with means for interception (12) and calibrated choke means (13) which can determine a flow of steam with a predetermined constant flow rate.

13. Device according to claim 12, wherein the said means for pumping the liquid for formation of the drink comprise a peristaltic pump.

14. Device according to claim 12, wherein the said means for interception consist of an electro-valve.

15. Device according to claim 12, wherein the source of steam is constituted by the boiler of a machine for the preparation and distribution of espresso coffee.

16. Device according to claim 12, wherein said mixing chamber (3) comprises a mixer.

## Patentansprüche

1. Verfahren für die Herstellung und Ausgabe eines heißen Schokoladengetränks, wobei eine Portion der Flüssigkeit, welche das Getränk bildet, auf eine vorgegebene Temperatur erhitzt wird und eine Portion einer Zubereitung, die Schokolade enthält, in der Portion der erhitzten Flüssigkeit dispergiert wird, **dadurch gekennzeichnet, dass** die Flüssigkeitsportion auf die erforderliche Temperatur erhitzt wird, indem ein Dampfstrom mit einer konstanten Durchflussrate, der aus einer Dampfstromquelle erhalten wird, über eine vorgegebene Zeit in einen Fluss der Flüssigkeit, die das Getränk bildet, das ebenfalls eine konstante Durchflussrate hat, und aus einer entsprechenden Quelle erhalten wird, gerichtet wird, indem das Verhältnis Qv/Qf eingestellt wird, wodurch die erforderliche Temperatur durch die Übertragung der Kondensationshitze des Dampfstroms erreicht wird,
und dass das Schokoladengetränk in einer Mischkammer (3) hergestellt wird.

2. Verfahren nach Anspruch 1, wobei das fertig gestellte Getränk durch einen Ausgießer (4) abfließen gelassen wird, ehe es ein Aufnahmegefäß erreicht.

3. Verfahren nach Anspruch 1, wobei die Zubereitung, die Schokolade enthält, in Pulverform vorliegt.

4. Verfahren nach Anspruch 1, wobei die Zubereitung, die Schokolade enthält, in flüssiger Form vorliegt.

5. Verfahren nach Ansprüchen 1 bis 4, wobei die Flüssigkeit, welche das Getränk hildet aus Wasser besteht, das einer Quelle entnommen wird.

6. Verfahren nach Anspruch 5. wobei die Wasserquelle ein Wasserleitungsnetz ist.

7. Verfahren nach Anspruch 5, wobei die Wasserquelle aus einem Tank besteht.

8. Verfahren nach Ansprüchen 1 bis 4, wobei die Flüssigkeit für das Schokoladengetränk aus Milch besteht, die aus einem entsprechenden Behälter genommen wird.

9. Verfahren nach Anspruch 8, wobei die Milch vom Typ haltbare Milch ist.

10. Verfahren nach Ansprüchen 1 bis 9, wobei der Dampfstrom aus überhitztem Dampf besteht.

11. Verfahren nach Ansprüchen 1 bis 10, wobei die Quelle des Dampfstroms aus dem Boiler einer Zubereitungs- und Ausgabemaschine für Espressokaffee besteht.

12. Vorrichtung für die Zubereitung und Ausgabe eines heißen Schokoladengetränks gemäß dem Verfahren von Anspruch 1, umfassend
eine Wasserdampfquelle (1), eine Flüssigkeitsquelle (5,6) für das Bilden des Getränks, eine Ausgabeproportionierungsvorrichtung (2) für eine Zubereitung, die Schokolade enthält, eine Kammer (3) zum Mischen dieser Zubereitung mit der Flüssigkeit zum Bilden des Getränks, wobei es eine Leitung (7) zur Zufuhr der Flüssigkeit zum Bilden des Getränks zwischen der Flüssigkeitsquelle (5,6) und der Mischkammer (3), Pump-Mittel (8) und kalibrierte Drosselungsmittel (9) enthält, die an dieser Leitung (7) angeordnet sind und einen Flüssigkeitsfluss mit einer vorgegebenen konstanten Durchflussrate erzeugen,
eine Leitung (10), um Dampf zwischen der Dampfquelle (1) und einem Zuflusspunkt (11) innerhalb der Leitung (7) zuzuführen, um die Flüssigkeit zum Bilden des Getränkes zuzuführen, angeordnet zwischen den kalibrierten Drosselungsmitteln (9) und der Mischkammer (3), wobei die Leitung (10) zur Zufuhr des Dampfs mit Mitteln zur Unterbrechung (12) und kalibrierten Drosselungsmitteln (13) ausgestattet ist, welche den Dampffluss mit einer vorgegebenen konstanten Durchflussrate bestimmen können.

13. Vorrichtung nach Anspruch 12, wobei die Mittel zum Pumpen der Flüssigkeit zum Bilden des Getränks eine Peristaltikpumpe umfassen.

14. Vorrichtung nach Anspruch 12, wobei die Mittel zur Unterbrechung aus einem Elektroventil bestehen.

15. Vorrichtung nach Anspruch 12, wobei die Dampfquelle durch den Boiler einer Zubereitungs- und Ausgabemaschine für Espressokaffee gebildet wird.

16. Vorrichtung nach Anspruch 12, wobei die Mischkammer (3) einen Mixer umfasst.

## Revendications

1. Procédé de préparation et de distribution d'une boisson chocolatée chaude, dans lequel une dose du liquide qui forme la boisson est chauffée à une température prédéterminée et une dose d'une préparation contenant du chocolat est dispersée dans la dose de liquide chauffé, **caractérisé en ce que** la dose de liquide est chauffée à la température requise en transformant un flux de vapeur d'eau avec un débit constant obtenue à partir d'une source de flux de vapeur d'eau pendant un temps prédéterminé en un flux dudit liquide qui forme la boisson, qui a également un débit constant, et est obtenue à partir d'une source respective en fixant le rapport Qv/Qf, moyennant quoi la température requise est atteinte par le transfert de la chaleur de condensation du flux de vapeur d'eau, et **en ce que** la boisson chocolatée est préparée dans une chambre de mélange (3).

2. Procédé selon la revendication 1, dans lequel la boisson finie est déchargée à travers un bec de distribution (4) avant d'atteindre un récipient de collecte.

3. Procédé selon la revendication 1, dans lequel ladite préparation contenant du chocolat est sous forme de poudre.

4. Procédé selon la revendication 1, dans lequel ladite préparation contenant du chocolat est sous forme liquide.

5. Procédé selon l'une quelconque des revendications 1 à 4, dans lequel ledit liquide qui forme la boisson est constitué d'eau prélevée dans une source.

6. Procédé selon la revendication 5, dans lequel la source de l'eau est un réseau de distribution d'eau.

7. Procédé selon la revendication 5, dans lequel la source de l'eau consiste en un réservoir.

8. Procédé selon l'une des revendications 1 à 4, dans lequel ledit liquide pour la boisson chocolatée consiste en du lait prélevé dans un récipient correspondant.

9. Procédé selon la revendication 8, dans lequel le lait est de type longue durée.

10. Procédé selon les revendications 1 à 9, dans lequel ladite circulation de vapeur d'eau est constituée de vapeur d'eau surchauffée.

11. Procédé selon les revendications 1 à 10, dans lequel la source de ladite circulation de vapeur d'eau consiste en la chaudière d'une machine destinée à la préparation et à la distribution de café expresso.

12. Dispositif de préparation et de distribution d'une boisson chocolatée chaude selon le procédé de la revendication 1, comprenant une source de vapeur d'eau (1), une source (5, 6) de liquide pour la formation de la boisson, un dispositif de dosage distributeur (2) pour une préparation contenant du chocolat, une chambre (3) pour mélanger cette préparation avec le liquide pour former la boisson, moyennant quoi il comprend un tuyau (7) pour la fourniture du liquide pour la formation de la boisson, entre ladite source de liquide (5, 6) et ladite chambre de mélange (3), des moyens de pompage (8) et des moyens étrangleurs calibrés (9) qui sont disposés sur ce tuyau (7) et génèrent une circulation du liquide avec un débit constant prédéterminé, un tuyau (10) pour fournir de la vapeur d'eau entre la source de vapeur d'eau (1) et un point de confluence (11) à l'intérieur dudit tuyau (7) pour fournir le liquide pour la formation de la boisson, disposé entre les moyens étrangleurs calibrés (9) et ladite chambre de mélange (3), ledit tuyau (10) pour fourniture de la vapeur d'eau étant pourvu de moyens d'interception (12) et de moyens étrangleurs calibrés (13) qui peuvent déterminer un flux de vapeur d'eau avec un débit constant prédéterminé.

13. Dispositif selon la revendication 12, dans lequel lesdits moyens de pompage liquide pour formation de la boisson comprennent une pompe péristaltique.

14. Dispositif selon la revendication 12, dans lequel lesdits moyens d'interception consistent en une électrovanne.

15. Dispositif selon la revendication 12, dans lequel la source de vapeur d'eau est constituée par la chaudière d'une machine de préparation et de distribution de café expresso.

16. Dispositif selon la revendication 12, dans lequel la chambre de mélange (3) comprend un mélangeur.
